Europäisches Patentamt

European Patent Office

Office européen des brevets

(19)

(11) **EP 0 644 999 B1**

(12) **EUROPÄISCHE PATENTSCHRIFT**

(45) Veröffentlichungstag und Bekanntmachung des Hinweises auf die Patenterteilung:
**12.05.1999 Patentblatt 1999/19**

(21) Anmeldenummer: **94911076.1**

(22) Anmeldetag: **24.03.1994**

(51) Int Cl.$^6$: **G01F 23/28**, B06B 1/06

(86) Internationale Anmeldenummer:
**PCT/DE94/00339**

(87) Internationale Veröffentlichungsnummer:
**WO 94/24524 (27.10.1994 Gazette 1994/24)**

(54) **FÜLLSTANDSMESSGERÄT**

FILL-LEVEL INDICATOR

INDICATEUR DE NIVEAU

(84) Benannte Vertragsstaaten:
**CH DE DK ES FR GB IT LI NL SE**

(30) Priorität: **10.04.1993 DE 4311963**

(43) Veröffentlichungstag der Anmeldung:
**29.03.1995 Patentblatt 1995/13**

(73) Patentinhaber: **Endress + Hauser GmbH + Co.
79689 Maulburg (DE)**

(72) Erfinder:
• **SCHWALD, Rolf
D-79650 Schopfheim (DE)**

• **KLÖFER, Peter
D-79585 Steinen (DE)**
• **ECKERT, Manfred
D-79674 Todtnau (DE)**

(74) Vertreter: **Morstadt, Volker, Dipl.-Ing.
Endress + Hauser
Zentrale Patentabteilung
Postfach 2222
79574 Weil am Rhein (DE)**

(56) Entgegenhaltungen:
**EP-A- 0 340 624          DE-C- 853 355
DE-U- 9 209 977**

**Beschreibung**

Die Erfindung betrifft ein Füllstandsmeßgerät zur Messung des Füllstandes in einem Behälter oder der Lagerhöhe eines Füllgutes auf einem Lagerplatz mit einem, von einem Gerätegehäuse umschlossenen, abwechselnd als Sendewandler zur Aussendung von Sendeimpulsen, und als Empfangswandler der, auf der Oberfläche des Füllgutes reflektierten Echoimpulse, betriebenen Ultraschallwandler und einer elektrischen Schaltung zur Anregung des Wandlers.

Füllstandsmeßgeräte dieser Art werden häufig bei der Überwachung von Prozessen, z.B. der Erfassung der Füllhöhe von Behältern, oder Lagerplätzen, oder ähnliche für den Ablauf von Prozessen notwendigen Meßwerte eingesetzt. Dabei wird die Füllhöhe, d.h. der Inhalt des Behälters oder die Lagerhöhe des Lagerplatzes aus der Laufzeit des Schallimpulses von der Membran des Ultraschallwandlers zu der, als Reflexionsebene wirkenden Oberfläche des Füllgutes und zurück zum Wandler ermittelt.

Zur Erzeugung des Sendeimpulses weist der, von einem Gerätegehäuse umschlossene Ultraschallwandler einen piezoelektrischen Kristall auf, welcher durch den, aus der elektrischen Schaltung gebildeten Sendeimpulsgenerator zu Schwingungen mit der Frequenz der Ultraschallwelle angeregt wird. Nach dem üblichen Stand der Technik ist auf der, der Membran des Wandlers zugewandten Seite die Stirnfläche und ein kurzes Stück der Mantelfläche des piezoelektrischen Kristalles von einer Kunststoffschicht umhüllt, welche der Anpassung der akustischen Impedanz des keramischen Werkstoffes des Kristalles an die akustische Impedanz des Mediums, in welches der Schallimpuls abgestrahlt werden soll, dient.

Auf der, der Membran abgewandten Seite, füllt eine Dämpfungsschicht aus Kunststoff den restlichen Teil des Gehäuseinnenraumes aus. Dabei umschließt dieser Kunststoff die andere Stirnfläche und den größten Teil der Mantelfläche des piezoelektrischen Kristalles. Die Dämpfungsschicht hat zur Aufgabe, das Schwingungsverhalten des Kristalles so zu beeinflussen, daß die Schwingrichtung im wesentlichen auf die Membran gerichtet ist und die Abstrahlung von Schwingungsenergie in jede andere Richtung bedämpft wird.

Nach der Lehre der deutschen Patentanmeldung P 42 30 773.2 kann diese Dämpfungsschicht aus einem Silikonelastomer mit einem hohen Anteil von Metalloxyden gebildet sein. Eine solche Dämpfungsschicht beeinflußt das Ausschwingverhalten des Kristalles und vermindert die ungewollte Abstrahlung von Schwingungsenergie in radiale, und der Membran abgewandte axiale Richtung.

Bei Sensoren, dessen Innengehäuse mit einer Kunststoffschicht ausgefüllt ist, gelingt dies, wegen der Begünstigung der Schallausbreitung durch die Kunststoffschicht jedoch nicht vollständig, sodaß noch immer eine Restmenge von Schallenergie vor allem radial von der Mantelfläche des Kristalles abgestrahlt wird und nicht als, auf das Füllgut gerichtete Schallenergie zur Verfügung steht. Insbesondere bei der Anwendung des Füllstandsmeßgerätes zur Messung von Füllständen in Behältern, reflektiert diese radial abgestrahlte Schallenergie an der Behälterwand, oder an Einbauten, oder an den Innenwänden von Schallführungsrohren und wird in den Meßraum gerichtet, was zur Folge hat, daß die Messung durch störende Nebenechos beeinflußt wird.

Üblicherweise wird versucht, diesen Nachteil dadurch zu begegnen, daß die, die Mantelfläche des piezoelektrischen Kristalles umschließende Kunststoffschicht in ihrer Wandstärke vergrößert wird, was zu einer Verlängerung des Schallaufweges und zu einer Erhöhung der Schallabsorption führt. Dem gleichen Ziel dient auch die Zwischenfügung einer, den piezoelektrischen Kristall umlaufenden Schaumstoffschicht.

Andererseits ist es aber die Forderung an solche Meßgeräte, den Gesamtdurchmesser der Gehäuse möglichst klein im Durchmesser zu gestalten, damit die Öffnung des Gehälterdeckels, durch welches das Meßgerät in dem Behälter eingebracht werden muß oder der Durchmesser eines Schallführungsrohres ebenfalls klein gehalten werden kann.

Ein elektroakustischer Wandler der gleichen Art ist aus der DE-PS 4027 949 bekannt. In dieser Patentschrift wird vorgeschlagen, die parallel zur Achsrichtung des Schallkopfes verlaufende unerwünschte Schallabstrahlung durch einen, den Schallkopf unter Bildung eines Zwischenraumes umlaufenden, aus einem glasfaserverstärkten Kunststoff gebildeten Füllring, zu bedämpfen. Maßnahmen zur Verringerung oder Verhinderung von radial abgestrahlten Schallwellen zeigt diese Druckschrift nicht.

Aus dem Deutschen Gebrauchsmuster G 92 09 977.7 ist ein Ultraschallwandler bekannt geworden, dessen Piezoschwinger mit einer Membran gekoppelt ist. Zur Anpassung der akustischen Impedanz des keramischen Piezoschwingers an die akustische Impedanz des Meßraumes ist der Schwinger von einer Anpaßschicht aus einem Silikonelastomer umhüllt.

Die Europäische Patentanmeldung 0 340 624 zeigt einen elektroakustischen Wandler, welcher als Schallsensor bzw. Schallempfänger für Schallfelder in gasförmigen Medien dient. Ein piezokeramischer Körper ist mit seiner Stirnseite durch eine Vergußmasse mit dem als Membran wirkenden Boden eines Gehäuses verbunden. Die Dichten der Werkstoffe von Körper und Gehäuse sind so gewählt, daß an der Grenzfläche nur vernachlässigbare Schallreflexion auftreten.

Demgegenüber stellt sich die vorliegende Erfindung die Aufgabe, ein Füllstandsmeßgerät vorzuschlagen, bei welchem, die, die Messung störenden durch die Mantelfläche des piezoelektrischen Kristalls ausgelöste Abstrahlung von Schallenergie verhindert oder zumindest noch weiter eingeschränkt wird und dabei auf eine Vergrößerung des Außendurchmessers des Meßgerätes verzichtet ist.

Um dies zu erreichen, verzichtet die Erfindung auf eine Verminderung der Schallabsorption durch Verlängerung der Dämpfungsstrecke sondern nutzt die Mehrfachreflexionen des Schallimpulses aus, welche an Werkstoffgrenzflächen verursacht durch Schallimdanzsprünge auftreten.

Gelöst wird diese Aufgabe durch die, in den Patentanspruch 1 gekennzeichneten Merkmale.

Eine vorteilhafte Ausgestaltung der Erfindung ist in den Unteransprüchen gekennzeichnet.

Weitere Merkmale und Vorteile sind in einem Ausführungsbeispiel dargestellt.

Es zeigen:

Figur 1    Einen Schnitt durch den Ultraschallwandler.

Figur 2    Einen Schnitt durch das Gehäuse des Ultraschallwandlers als Einzelteil.

Figur 3    Eine Draufsicht auf das, den piezoelektrischen Kristall und die Anpaß- sowie Dämpfungsschicht umschließende Wandlergehäuse.

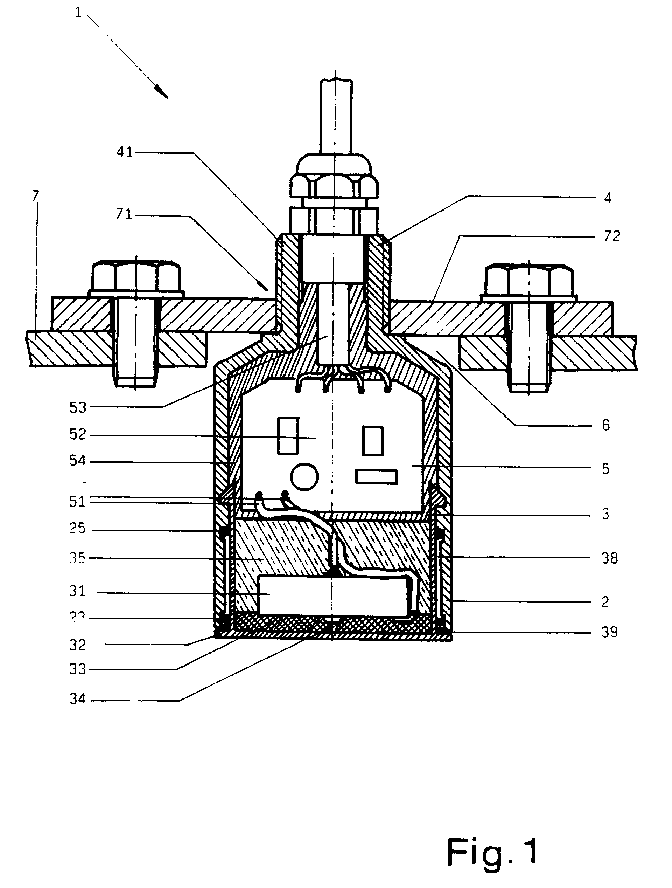

In Fig. 1 ist mit 1 ein Ultraschallwandler dargestellt, welcher der Messung des Füllstandes in einem Behälter bzw. der Füllhöhe auf einem Lagerplatz dient. Der Ultraschallwandler besteht aus dem Gerätegehäuse 2, dem Wandlergehäuse 3 und dem Anschlußteil 4 sowie dem Sendeimpulsgenerator 5.

Der Ultraschallwandler 1 ist durch die Öffnung 6 in den Innenraum eines nichtdargestellten Behälters eingeführt. Der Behälter ist von einem Deckel 7 verschlossen, von welchem nur ein kurzer Abschnitt dargestellt ist. Zur Befestigung des Ultraschallwandlers 1 durchdringt der Gewindezapfen 41 des Anchlußteiles 4 eine zentrische Bohrung 71 des Anschlußflansches 72. Der Gewindezapfen 41 bildet mit dem Flansch 72 eine lösbare Verbindung, durch welche der Ultraschallwandler 1 an dem Anschlußflansch 72 gehalten ist.

Im Inneren des topfförmigen Wandlergehäuses 3 ist der piezoelektrische Kristall 31 angeordnet. Der Boden des Wandlergehäuses 3 bildet die Membran 32 des Ultraschallwandlers. Auf der, der Membran 32 zugewandten Seite ist die Stirnfläche und ein kurzes Stück der Mantelfläche des piezoelektrischen Kristalles 31 von der Anpaßschicht 33 umhüllt. Um dies zu erreichen, ist der piezoelektrische Kristall 31 mittels kurzen Stützen 34 in einen genau definierten Abstand von der Membran 32 gehalten.

Der, der Membran 32 abgewandte Innenraum des Wandlergehäuses 3 ist vollkommen von der Dämpfungsschicht 35 ausgefüllt. Damit ist der piezoelektrische Kristall 31, sowohl an seiner Mantelfläche wie auch auf der, der Membran 32 abgewandten Stirnfläche, von der Dämpfungsschicht 35 umhüllt. Elektrische Anschlußleitungen 51 verbinden den piezoelektrischen Kristall 31 mit dem, durch eine elektrische Schaltung 52 gebildeten Sendeimpulsgenerator 5. Dieser wiederum steht über eine weitere elektrische Leitung 53 mit einem, entfernt vom Meßraum angeordneten Auswertegerät in elektrischer Verbindung.

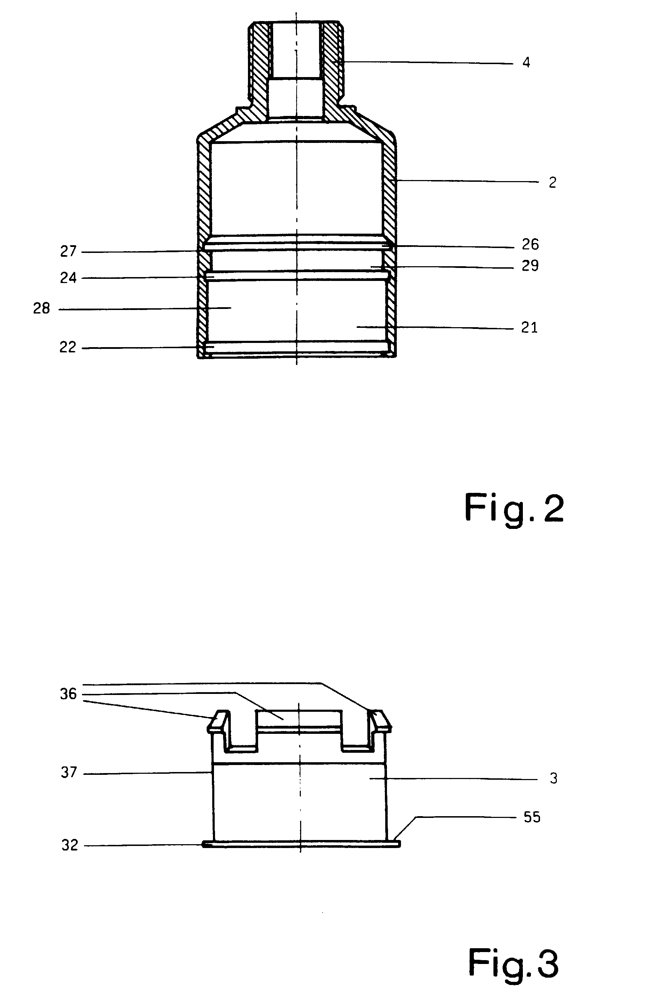

Wie aus Fig. 3 ersichtlich ist, weist das topfförmige Wandlergehäuse 3 an seinem, der Membran 32 abgewandten Ende, Arretierungsfedern 36 auf. Diese sind gleichmäßig am Umfang des Wandlergehäuses 3 verteilt. Auf die Funktion dieser Arretierungsfedern 36 soll später noch näher eingegangen werden. Das topfförmige Wandlergehäuse 3 ist vorteilhafterweise als Spritzteil aus einem Polypropylen hergestellt.

Der Sendeimpulsgenerator 5 erzeugt einen elektrischen Sendeimpuls und regt über die elektrischen Verbindungsleitungen 51 den piezoelektrischen Kristall 31 zu Schwingungen in der Frequenz der Ultraschallwelle an. Die Abstrahlung der Schallenergie erfolgt im wesentlichen axial von den Stirnflächen des Kristalles 31. Ein Teil der Energie wird jedoch auch radial von der Mantelfläche des Kristalles 31 abgestrahlt. Die der Membran 32 zugewandte und den Zwischenraum zwischen der Membran 32 und dem Kristall 31 ausfüllende Kunststoffschicht 33 bewirkt eine Anpassung der akustischen Impedanz des keramischen Werkstoffes des piezoelektrischen Kristalles 31 an die Impedanz der Medien, in welches der Schallimpuls abgestrahlt werden soll.

Die den restlichen Innenraum des topfförmigen Wandlergehäuses 3 ausfüllende Dämpfungsschicht 35 bedämpft die Abstrahlung von Energie sowohl in der, der Membran 32 abgewandten axialen, wie auch der radialen Richtung. Da diese Kunststoffschicht jedoch nicht nur eine Bedämpfung der abgestrahlten Energie sondern auch ein Impedanzanpassung bewirkt, gelingt die vollkommene Verhinderung der ungewollten Energieabstrahlung nicht. Stellt eine Verminderung der Abstrahlung in, der Membran 32 abgewandten axialen Richtung, derzeit kein Problem mehr da, ist eine zufriedenstellende Lösung der radialen Abstrahlung bisher noch nicht gefunden. Zwar wird versucht, die Verminderung der Abstrahlung von radialer Schwingungsenergie durch eine Erhöhung der Schallabsorption mittels Vergrößerung des Schallaufweges durch die Bedämpfungsschicht zu erreichen, was aber immer zu einer Vergrößerung des Gehäusedurchmessers führt und sich in idealer Weise nicht verwirklichen läßt.

Der Übergang von Schallenergie von einem Werkstoff zum anderen bewirkt einen Schallimpedanzsprung an den Werkstoffgrenzflächen, der zu einer Teilreflektion der Schalldruckwelle führt. Dies gilt auch für den Übergang von Kunststoff zu Luft. Dieser Übergang von Schallenergie an den Werkstoffgrenzflächen hängt sehr stark von dem Verhältnis der Schallimpedanzen $Z_1$ und $Z_2$ der beiden Werkstoffe ab. Der Reflektionsfaktor r für den Schalldruck berechnet sich nach der Formel

$$r = (Z_1 - Z_2) / (Z_1 + Z_2).$$

Bei Werkstoffen, deren Schallkennimpedanz sich beispielsweise um den Faktor 5 unterscheiden, ergibt sich ein Reflexionsfaktor von 0,67. Dies bedeutet, daß der Schalldruck nach Durchgang der Werkstoffgrenzflächen auf 33 % seiner ursprünglichen Größe abgesunken ist. Nach Durchgang zweier Werkstoffgrenzflächen sogar auf 11 % seiner ursprünglichen Größe. Beim Übergang des Schalldruckes von Kunststoff zu Luft ergeben sich sehr hohe Reflexionskoeffizienten, d.h. ein großer Teil der Druckwelle wird zurückreflektiert. Da dieser Effekt unabhängig von den Werkstoffdicken ist, können z. B. Gehäusewände sehr dünn oder auch die Abstände zu Gehäusewänden sehr klein gewählt werden.

Die Erfindung nutzt nun diesen Effekt aus, indem das Wandlergehäuse 3 koaxial die Öffnung 21 des Gerätegehäuses 2 durchdringt und dabei von dem Gerätegehäuse 2 durch einen genau definierten dünnen ringzylindrischen sowie radial verlaufenden Luftspalt 38 getrennt und im Bereich der Mantelfläche des piezoelektrischen Kristalles 31 zusätzlich Körperschall entkoppelt ist. Erreicht wird dies, wie in den Fig. 2 und 3 im einzelnen dargestellt, daß drei kurze zylindrische Abschnitte größeren Durchmessers die Öffnung 21 des Gerätegehäuses 2 umlaufen. Der, dem Anschlußteil 4 abgewandte erste Abschnitt ist in Durchmesser und Breite so gewählt, daß er eine Nut 22 zur Aufnahme einer flexiblen ringförmigen Dichtung 23, runden Querschnittes bildet. Der zweite, mittlere Abschnitt, bildet ebenfalls ein Nut 24, welcher ebenfalls zur Aufnahme einer ringförmigen Dichtung 25 bestimmt ist. Die ringförmigen Dichtringe 23, 25 können aus handelsüblichen O-Ringen gebildet sein.

Der dritte Abschnitt 26 ist etwas breiter und im Querschnitt so gewählt, daß seine, der Nut 24 zugewandte Ringfläche eine Schulter 27 bildet, welche im eingefügten Zustand des Wandlergehäuses 3 in der Öffnung 21 dem Abstützen der Arretierungsfedern 36 dient.

Zwischen den Nuten 22 und 24 erstreckt sich ein längerer Abschnitt 28, dessen Durchmesser ca. 2 mm größer als der Durchmesser, des, zwischen der Nut 24 und dem Abschnitt 26 erstreckenden Abschnitt 29 ist. Der Abschnitt 29 bildet im Zusammenwirken mit den Dichtungen 23 und 25 die exakte Führung der Mantelfläche 37 des Wandlergehäuses 3 in der Öffnung 21 des Gerätegehäuses 2. Dabei ist durch die Innenwand des Abschnittes 28 des Gerätegehäuses 2 und der Mantelfläche 37 des Wandlergehäuses 3 ein genau definierter ringzylindrischer Luftspalt 38 von ca. 1 mm Dicke oder kleiner und einer Länge von ca. 25 mm gebildet. Der Luftspalt 38 umläuft die Mantelfläche des piezoelektrischen Kristalles 31. Der Luftspalt 38 bewirkt in den Werkstoffgrenzflächen einen Übergang von Kunststoff zu Luft, und wiederum von Luft zu Kunststoff und an der Außenfläche des Gerätegehäuses 2 noch einmal von Kunststoff zu Luft. Durch jeden dieser Übergänge wird, verursacht durch den Schallimpedanzsprung, eine Teilreflexion der Schallwelle ausgelöst.

Die Membran 32 des Wandlergehäuses 3 erstreckt sich in radialer Richtung über die Mantelfläche 37 hinaus, so daß ihr Umfang mit dem Umfang des Gerätegehäuses 2 zusammenfällt. Im eingeführten und arretierten Zustand liegt die, der Stirnfläche des Gerätegehäuses 2 zugewandte Ringfläche 55 der Membran 32 nicht direkt an der Stirnfläche des Gerätegehäuses 2 an, sondern zwischen diesen Teilen ist ein zweiter, sich radial erstreckender Luftspalt 39 von ca. 0,2 mm gebildet.

Das Gerätegehäuse 2 kann ebenfalls als Spritzteil aus einem Polypropylen hergestellt sein.

Wie aus Fig. 1 ersichtlich, erfolgt nun die Zusammenfügung der Teile 2 und 3 derart, daß zunächst die Anschlußleitung 53 mit der elektrischen Schaltung 52 in elektrische Verbindung gebracht und in die Öffnung 21 des Gerätegehäuses 2 eingeführt ist. Der Sendeimpulsgenerator 5 nimmt dabei die in Fig. 1 gezeigte Lage ein. Nach Einsetzen der ringförmigen Dichtungen 23 und 25 wird das vorkomplettiert Wandlergehäuse 3 soweit in die Öffnung 21 eingeführt, bis das Wandlergehäuse 3 die in Fig. 1 gezeigte Lage einnimmt und die Arretierungsfedern 36 an der Schulter 27 des Gerätegehäuses 2 eingerastet sind. In dieser Lage der Teile 3 und 5 innerhalb des Gerätegehäuses 2 kann der verbleibende Freiraum mit einem geeigneten Verguß 54 ausgefüllt sein.

Das Wandlergehäuse 3 ist nun über einen präzise definierten und exakt zylindrischen sowie einen sich radial erstreckenden ringförmigen Luftspalt von dem Gerätegehäuse 2 getrennt. Die beiden Dichtringe 23 und 25 dichten den zylindrischen Luftspalt auch unter schwierigen Einsatzbedingungen dauerhaft ab und bewirken eine zusätzliche Körperschallentkopplung des der Mantelfläche gegenüberliegende Bereiches des Wandlergehäuses 3 von dem Gerätegehäuse 2.

Durch die insgesamt drei Werkstoffübergänge Wandlergehäuse 3 - Luftspalt, Luftspalt-Gerätegehäuse 2, Gerätegehäuse 2 - Meßraum, ergibt sich beispielsweise mit den Schallkennimpedanzen für den Werkstoff Kunststoff $Z_K \cong 2.10^6 \, N_S \, / \, m^3$ und Luft $Z_L \cong 400 \, N_S \, / \, m^3$ eine Reduktion des, an der Mantelfläche des piezoelektrischen Kristalles 31 radial abgestrahlten Schalldruckkes von 45 dB bis 50 dB gegenüber einer direkten Abstrahlung zur Luft.

Selbstverständlich können die Schallimpedanzsprünge durch Grenzflächen auch anderer Werkstoffe gebildet sein.

**Patentansprüche**

1. Füllstandsmeßgerät zur Messung des Füllstandes in einem Behälter oder der Lagerhöhe eines Füllgutes auf einem Lagerplatz,

- mit einem von einem Gerätegehäuse (2) umschlossenen,

-- abwechselnd als Sendewandler zur Aussendung von Sende impulsen und als Empfangswandler zum Empfang von auf der Oberfläche des Füllgutes reflektierten Echoimpulsen, betriebenen Ultraschallwandler,

dadurch gekennzeichnet, daß

- der Sende- und Empfangswandler einen piezoelektrischen Kristall (31) aufweist,

  -- dessen eine Seite von einer Anpaßschicht (33) und
  -- dessen andere Seite von einer Dämpfungsschicht (35) umhüllt ist,

- der Sende- und Empfangswandler einschließlich Anpaßschicht (33) und Dämpfungsschicht (35) in einem Wandlergehäuse (3) angeordnet ist,
- das Wandlergehäuse (3) unter Bildung eines exakt ringzylindrischen, koaxialen Luftspaltes (38) von dem Gerätegehäuse (2) des Füllstandsmeßgerätes (1) koaxial umgriffen ist und Werkstoffgrenzflächen ausgebildet sind, an denen durch Schallimpedanzsprünge die von der Mantelfläche des piezoelektrischen Kristalles (31) radial ausgestrahlte Schallenergie reflektiert.

2. Füllstandsmeßgerät nach Anspruch 1 dadurch gekennzeichnet, daß das, den Sende- und Empfangswandler (31, 33, 35) umschließende Wandlergehäuse (3) eine Öffnung (21) des Gerätegehäuses (2) durchdringt und durch flexible Dichtringe (23, 25) in einem definierten Abstand von der Wandung (28) der Öffnung (21) des Gerätegehäuses (2) gehalten ist.

3. Füllstandsmeßgerät nach Anspruch 1 dadurch gekennzeichnet, daß der Luftspalt (38) eine Spaltbreite von 1 mm oder kleiner einnimmt.

4. Füllstandsmeßgerät nach Anspruch 1 und 3 dadurch gekennzeichnet, daß sich der Luftspalt (38), in axialer Richtung, mindestens entlang der Mantelfläche des piezoelektrischen Kristalles (31) und ein Stück der Anpaßschicht (33) sowie der Dämpfungsschicht (35) erstreckt.

5. Füllstandsmeßgerät nach Anspruch 1, 3 und 4 dadurch gekennzeichnet, daß das Gerätegehäuse (2), einen sich axial erstreckenden Abschnitt (28), definierten Durchmessers aufweist, durch welchen, im Zusammenwirken mit der Mantelfläche (37) des Wandlergehäuses (3) der Luftspalt (38) ausgebildet ist.

6. Füllstandsmeßgerät nach Anspruch 2 dadurch gekennzeichnet, daß an dem Gerätegehäuse (2) die Öffnung (21) umlaufende Nuten (22, 24) zur Aufnahme der flexiblen Dichtringe (23, 25) angeformt sind.

7. Füllstandsmeßgerät nach Anspruch 2 dadurch gekennzeichnet, daß an dem Wandlergehäuse (3) an der, der Membran (32) abgewandten Seite der Mantelfläche (37), umlaufende Arretierungsfedern (36) angeformt sind.

8. Füllstandsmeßgerät nach Anspruch 2 und 7 **dadurch gekennzeichnet,** daß das Gerätegehäuse (2) eine Arretierungsnut (26) aufweist, in welche Arretierungsfedern (36) des Wandlergehäuses (3) eingreifen, und sich an der Schulter (27) der Arretierungsnut (26) abstützen.

9. Füllstandsmeßgerät nach Anspruch 2 dadurch gekennzeichnet, daß der axiale Abstand zwischen der Schulter (27) des Gerätegehäuses (2) und der Membran (32) des Wandlergehäuses (3) einen, sich radial erstreckenden, ringförmigen Luftspalt (39) ausbilden.

10. Füllstandsmeßgerät nach Anspruch 9 dadurch gekennzeichnet, daß sich die Membran (32) des Wandlers (31, 32, 33, 34, 35), radial ein Stück über die Mantelfläche (37) erstreckt und auf der, der Schallabstrahlung abgewandten Seite, die ringförmige Wand (55) des sich radial erstreckenden Luftspaltes (39) ausbildet.

11. Füllstandsmeßgerät nach Anspruch 9 dadurch gekennzeichnet, daß der, sich radial erstreckende Luftspalt (39) von der Stirnfläche des Gerätegehäuses (2) und der ringförmigen Rückfläche (55) der Membran (32) gebildet ist.

12. Füllstandsmeßgerät nach Anspruch 10 dadurch gekennzeichnet, daß der Luftspalt (39) eine Dicke von 0,2 mm oder kleiner aufweist.

13. Füllstandsmeßgerät nach einem der vorstehenden Ansprüche dadurch gekennzeichnet, daß das Wandlergehäuse (3) durch die Luftspalten (38, 39) zumindest im Bereich der Mantelfläche des piezoelektrischen Kristalles (31) von dem Gerätegehäuse (2) körperschallentkoppelt ist.

14. Füllstandsmeßgerät nach Anspruch 1 dadurch gekennzeichnet, daß das Gerätegehäuse (2) sowie das Wandlergehäuse (3) als Spritzteil aus einem Polypropylen hergestellt sind.

## Claims

1. Filling-level measuring device for measuring the filling level in a container or the storage height of a material filled in a storage location,

   - having an ultrasonic transducer which is enclosed by a device housing (2) and

      -- is operated alternately as a transmitting transducer for emitting transmission pulses and as a receiving transducer for receiving echo pulses reflected on the surface of the filled material,

   characterized in that

   - the transmitting and receiving transducer has a piezoelectric crystal (31),

      -- one side of which is surrounded by an adaptation layer (33) and
      -- the other side of which is surrounded by a damping layer (35),

   - the transmitting and receiving transducer, including the adaptation layer (33) and damping layer (35), is arranged in a transducer housing (3),
   - the transducer housing (3) is surrounded coaxially by the device housing (2) of the filling-level measuring device (1), forming an exactly cylindrical, coaxial air gap (38), and material boundary surfaces are formed, on which the acoustic energy emitted radially by the outer surface of the piezoelectric crystal (31) is reflected due to acoustic impedance jumps.

2. Filling-level measuring device according to Claim 1, characterized in that the transducer housing (3) surrounding the transmitting and receiving transducer (31, 33, 35) penetrates through an opening (21) of the device housing (2) and is retained at a defined distance from the wall (28) of the opening (21) of the device housing (2) by means of flexible sealing rings (23, 25).

3. Filling-level measuring device according to Claim 1, characterized in that the air gap (38) has a gap width of 1 mm or less.

4. Filling-level measuring device according to Claims 1 and 3, characterized in that the air gap (38) extends in the axial direction at least along the outer surface of the piezoelectric crystal (31) and a section of the adaptation layer (33) as well as of the damping layer (35).

5. Filling-level measuring device according to Claims 1, 3 and 4, characterized in that the device housing (2) has an axially extending portion (28) of defined diameter, by which the air gap (38) is formed in cooperation with the outer surface (37) of the transducer housing (3).

6. Filling-level measuring device according to Claim 2, characterized in that grooves (22, 24) for accommodating the flexible sealing rings (23, 25) are formed on the device housing (22) such that they extend around the opening (21).

7. Filling-level measuring device according to Claim 2, characterized in that peripheral locking springs (36) are formed on the transducer housing (3), on the side of the outer surface (37) facing away from the membrane (32).

8. Filling-level measuring device according to Claims 2 and 7, characterized in that the device housing (2) has a locking groove (26), into which locking springs (36) of the transducer housing (3) engage and support themselves on the shoulder (27) of the locking groove (26).

9. Filling-level measuring device according to Claim 2, characterized in that the axial distance between the shoulder (27) of the device housing (2) and the membrane (32) of the transducer housing (3) forms a radially extending annular air gap (39).

10. Filling-level measuring device according to Claim 9, characterized in that the membrane (32) of the transducer (31, 32, 33, 34, 35) extends radially beyond the outer surface (37) and forms the annular wall (55) of the radially extending air gap (39) on the side facing way from the acoustic emission.

11. Filling-level measuring device according to Claim 9, characterized in that the radially extending air gap (39) is formed by the end face of the device housing (2) and the annular rear face (55) of the membrane (32).

12. Filling-level measuring device according to Claim 10, characterized in that the air gap (39) has a thickness of 0.2 mm or less.

13. Filling-level measuring device according to one of the preceding claims, characterized in that the transducer housing (3) is decoupled from the structure-borne sound of the device housing (2), at least in the region of the outer surface of the piezoelectric crystal (31), by the air gaps (38, 39).

14. Filling-level measuring device according to Claim 1, characterized in that the device housing (2) and the transducer housing (3) are manufactured as moulded parts consisting of a polypropylene.

## Revendications

1. Indicateur de niveau destiné à mesurer le niveau dans un récipient ou la hauteur d'un produit stocké dans un lieu de stockage, comprenant un transducteur à ultrasons monté à l'intérieur d'un boîtier d'indicateur de niveau (2) et exploité alternativement comme transducteur d'émission destiné à émettre des impulsions d'émission et comme transducteur de réception destiné à recevoir des impulsions d'échos, réfléchies sur la surface du produit stocké, caractérisé en ce que

   - le transducteur d'émission et de réception comporte un cristal piézo-électrique (31), dont une face est revêtue d'une couche d'adaptation (33) et dont l'autre face est revêtue d'une couche d'affaiblissement (35),

   - le transducteur d'émission et de réception, y compris la couche d'adaptation (33) et la couche d'affaiblissement (35), sont disposés dans un boîtier de transducteur (3),

   - le boîtier de transducteur (3) est entouré dans le sens coaxial par le boîtier (2) de l'indicateur de niveau (1), en laissant subsister un interstice (38) coaxial, de forme exactement cylindrique annulaire,

   - des interfaces entre les matières sont formées, l'énergie acoustique rayonnée dans le sens radial par la surface de l'enveloppe du cristal piézo-électrique (31) étant réfléchie sur ces interfaces par des discontinuités de l'impédance acoustique.

2. Indicateur de niveau selon la revendication 1, caractérisé en ce que le boîtier de transducteur (3) qui entoure le transducteur d'émission et de réception (31, 33, 35) traverse une ouverture (21) du boîtier d'indicateur de niveau (2) et est maintenu par des bagues d'étanchéité flexibles (23, 25) à une distance définie de la paroi (28) de l'ouverture (21) du boîtier d'indicateur de niveau (2).

3. Indicateur de niveau selon la revendication 1, caractérisé en ce que la largeur de l'interstice (38) est égale à 1 mm ou moins.

4. Indicateur de niveau selon les revendications 1 et 3, caractérisé en ce que l'interstice (38) s'étend dans le sens axial, au moins le long de la surface d'enveloppe du cristal piézo-électrique (31) et d'une partie de la couche d'adaptation (33), ainsi que de la couche d'affaiblissement (35).

5. Indicateur de niveau selon les revendications 1, 3 et 4, caractérisé en ce que le diamètre défini du boîtier d'indicateur de niveau (2) présente dans le sens axial une section (28) qui, conjointement avec la surface d'enveloppe (37) du boîtier de transducteur (3), forme l'interstice (38).

6. Indicateur de niveau selon la revendication 2, caractérisé en ce que des rainures (22, 24), destinées à recevoir les bagues d'étanchéité flexibles (23, 25), sont moulées sur le pourtour de l'ouverture (21) du boîtier d'indicateur de niveau (2).

7. Indicateur de niveau selon la revendication 2, caractérisé en ce que des ressorts de blocage (36) sont moulés contre le pourtour du boîtier de transducteur (3), sur le côté de la surface d'enveloppe (37) opposé à la membrane (32).

8. Indicateur de niveau selon les revendications 2 et 7, caractérisé en ce que le boîtier d'indicateur de niveau (2) présents une rainure de blocage (26), avec laquelle des ressorts de blocage (36) du boîtier de transducteur (3) sont en prise, et sont soutenus par l'épaulement (27) de la rainure de blocage (26).

9. Indicateur de niveau selon la revendication 2, caractérisé en ce que la distance axiale entre l'épaulement (27) du boîtier d'indicateur de niveau (2) et la membrane (32) du boîtier de transducteur (3) forme un interstice (39) annulaire, qui s'étend dans le sens radial.

10. Indicateur de niveau selon la revendication 9, caractérisé en ce que la membrane (32) du transducteur (31, 32, 33, 34, 35) s'étend dans le sens radial au-delà de la surface d'enveloppe (37) et forme la paroi annulaire (55), opposée au côté émettant le son, de l'interstice (39) qui s'étend dans le sens radial.

11. Indicateur de niveau selon la revendication 9, caractérisé en ce que l'interstice (39) qui s'étend dans le sens radial est formée par la face frontale du boîtier d'indicateur de niveau (2) et la face arrière annulaire (55) de la membrane (32).

12. Indicateur de niveau selon la revendication 10, caractérisé en ce que l'épaisseur de l'interstice (39) est égal à 0,2 mm ou moins.

13. Indicateur de niveau selon l'une quelconque des revendications précédentes, caractérisé en ce que, grâce à la présence des fentes d'air (38, 39), le boîtier de transducteur (3) est antirésonnant face au bruit de structure du boîtier d'indicateur de niveau (2), au moins dans la zone de la surface d'enveloppe du cristal piézo-électrique (31).

14. Indicateur de niveau selon la revendication 1, caractérisé en ce que le boîtier d'indicateur de niveau (2), ainsi que le boîtier de transducteur (3), sont des boîtiers en polypropylène, réalisés par un procédé de moulage par injection.

Fig. 1

# Fig. 2

# Fig. 3